# EUROPÄISCHE PATENTSCHRIFT

(11) **EP 3 084 220 B1**
(45) Veröffentlichungstag und Bekanntmachung des Hinweises auf die Patenterteilung: **09.10.2019**
(21) Anmeldenummer: 13815481.0
(22) Anmeldetag: 19.12.2013
(51) Int. Cl.: F04C 25/02, B60T 17/02, F04C 28/06, F04C 29/00, F16D 41/08

(54) **KFZ-AGGREGATEANORDNUNG MIT VERBRENNUNGSMOTOR UND SCHALTBARER VAKUUMPUMPE**
AUTOMOTIVE PROPULSION UNIT WITH COMBUSTION ENGINE AND SWITCHABLE VACUUM PUMP
SYSTÈME DE PROPULSION AUTOMOBILE AVEC MOTEUR À COMBUSTION ET POMPE À VIDE EMBRAYABLE

(43) Veröffentlichungstag der Anmeldung: 26.10.2016
(73) Patentinhaber: Pierburg Pump Technology GmbH, 41460 Neuss (DE)
(72) Erfinder: CRAMER, Sebastian, 50259 Pulheim (DE)
(74) Vertreter: Patentanwälte ter Smitten Eberlein-Van Hoof Rütten Partnerschaftsgesellschaft mbB
(86) Internationale Anmeldenummer: PCT/EP2013/077429
(87) Internationale Veröffentlichungsnummer: WO 2015/090415

(56) Entgegenhaltungen:
- EP-A1- 2 746 584
- WO-A1-2012/164466
- DE-C2- 19 854 243

## Beschreibung

Die Erfindung bezieht sich auf eine Kfz- Aggregateanordnung bestehend aus einem Verbrennungsmotor, einer Vakuumpumpe, die mit dem Verbrennungsmotor mechanisch gekoppelt ist und durch diesen angetrieben wird, und einem pneumatischen Bremskraftverstärker, der durch die Vakuumpumpe evakuiert, d.h. mit Unterdruck versorgt wird.

In Kraftfahrzeugen (Kfz) dient die Vakuumpumpe dazu, einen Unterdruck von beispielsweise weniger als absolut 500 Millibar als potentielle Energie für den pneumatischen Bremskraftverstärker zur Verfügung zu stellen. Die mechanische Vakuumpumpe ist mit dem Verbrennungsmotor über ein Kopplungselement mechanisch gekoppelt, und wird auf diese Weise mechanisch angetrieben. Der Pumpbetrieb der Vakuumpumpe zur Versorgung des Bremskraftverstärkers wird relativ selten benötigt, beispielsweise bei Betriebsbeginn des Kraftfahrzeugs und nach jedem Bremsvorgang. Um den Verschleiß und den Energieverbrauch für den Antrieb der Vakuumpumpe auf ein Minimum zu reduzieren, ist die Vakuumpumpe mit einer Kupplungsanordnung ausgestattet, durch die das Kopplungselement, das von dem Verbrennungsmotor mechanisch angetrieben wird, und der Pumpenrotor, der als Verdichter ausgebildet ist, gezielt drehfest miteinander verriegelt bzw. voneinander gelöst werden kann.

Aus DE 198 54 243 C2 ist eine Kfz- Aggregateanordnung bekannt, bei der der Pumpenrotor durch eine pneumatische Reibungskupplung bei Bedarf mit dem Kopplungselement zusammengekuppelt wird. Eine Reibungskupplung erfordert relativ hohe Kräfte zum Öffnen oder zum Schließen. Da die Reibungskupplung einen pneumatischen Aktuator aufweist, muss hierfür eine weitere Druckquelle zur Verfügung stehen, um stets geschaltet werden zu können, wodurch der Aufbau relativkomplex ist.

WO 2012/164466 offenbart eine Kfz-Aggregateanordnung mit einem Verbrennungsmotor und einer von diesem mechanisch angetriebenen Vakuumpumpe, die einen Vakuumkreis bedarfsweise und Fluiddruckabhängig evakuiert. Hierzu ist eine schaltbare Kupplungsanordnung vorgesehen, die hydraulisch aktuiert wird über ein pneumatisch aktuiertes Hydraulikventil, Das Hydraulikventil schaltet zum Schalten der Kupplungsanordnung den Hydraulikdruck des Schmiermittelkreises gegebenenfalls auf die Kupplung durch. Das Hydraulikventil wird durch den Fluiddruck in dem Vakuumkreis aktuiert.

Aufgabe der Erfindung ist es, eine einfache und zuverlässige Kfz-Aggregateanordnung mit einer schaltbaren mechanischen Vakuumpumpe zu schaffen.

Diese Aufgabe wird gelöst durch eine Kfz- Aggregateanordnung mit den Merkmalen des Anspruchs 1.

Die Aggregateanordnung setzt sich aus mehreren Aggregaten zusammen, nämlich im Wesentlichen aus dem Kfz-Verbrennungsmotor, der schaltbaren mechanischen Vakuumpumpe, die mechanisch durch den Verbrennungsmotor angetrieben wird, und dem pneumatischen Bremskraftverstärker.

Der Bremskraftverstärker weist einen Unterdruckraum auf, der über eine Unterdruckleitung mit einem Sauganschluss der Vakuumpumpe verbunden ist. Der Druck P in dem Unterdruckraum wird während des Betriebes des Verbrennungsmotors unterhalb eines Schaltdruckes PS gehalten, beispielsweise unterhalb eines Absolutdruckes von 600-500 Millibar. Sobald der der Druck P in dem Unterdruckraum des Bremskraftverstärkers über den Schaltdruck PS steigt, senkt die Vakuumpumpe über ihren Sauganschluss den Druck P in dem Unterdruckraum wieder.

Die Vakuumpumpe weist ein Kopplungselement auf, das dauerhaft drehfest mit dem Verbrennungsmotor gekoppelt ist, beispielsweise mit der Kurbelwelle oder der Nockenwelle des Verbrennungsmotors. Das Kopplungselement dreht sich daher stets mit einer Drehzahl, die proportional ist zu der Drehzahl des Verbrennungsmotors. Die Vakuumpumpe weist einen Verdränger- Pumpenrotor auf, der über eine hydraulisch schaltbare Kupplungsanordnung mit dem Kopplungselement gekuppelt werden kann. Durch den Pumpenrotor wird das Gas aus dem Unterdruckraum von dem Sauganschluss der Vakuumpumpe zu Ihrem Druckanschluss gepumpt und dabei verdichtet.

Die Vakuumpumpe weist einen hydraulischen Steuerungsanschluss auf, der mit der Kupplungsanordnung fluidisch verbunden ist, so dass die hydraulische Kupplungsanordnung über einen entsprechenden hydraulischen Druck an dem Steuerungsanschluss gesteuert werden kann, nämlich zum drehfesten Verriegeln des Kupplungselements mit dem Pumpenrotor im Verriegelungszustand und zum Lösen des Koppelungselements von dem Pumpenrotor im Entriegelungszustand der Kupplungsanordnung.

Es ist eine Hydraulikpumpe zum Pumpen einer Hydraulikflüssigkeit mit einem Steuerungsdruck P1 vorgesehen. Die Hydraulikpumpe ist bevorzugt eine Schmiermittelpumpe zur Versorgung des Verbrennungsmotors mit der als Schmiermittel ausgebildeten Hydraulikflüssigkeit. Grundsätzlich kann die Hydraulikpumpe jedoch auch eine reine Hydraulikpumpe sein, durch die auch noch andere hydraulische Nebenaggregate in dem Kraftfahrzeug hydraulisch versorgt werden.

Fluidisch zwischen der Hydraulikpumpe und der Vakuumpumpe ist ein schaltbares Steuerungsventil vorgesehen, das in seinem offenen Entriegelungszustand den Steuerungsdruck P1 der Hydraulikflüssigkeit zum Entriegeln der Kupplungsanordnung auf den Steuerungsanschluss der Vakuumpumpe durchschaltet. Sobald der Steuerungsdruck P1 der Hydraulikflüssigkeit durch das in seinem Entriegelungszustand geöffnete Steuerungsventil auf den Steuerungsanschluss der Vakuumpumpe durchgeschaltet ist, schaltet die Kupplungsanordnung in ihren Entriegelungszustand. Bei Ausfall der Hydraulikpumpe bzw. bei einer Fehlfunktion des Steuerungsventils wird kein Steuerungsdruck an den Steuerungsanschluss angelegt, so dass die Vakuumpumpen-Kupplungsanordnung in diesem Fall stets im Verriegelungszustand betrieben wird. Hierdurch ist die gesamte Steuerungsmimik der Aggregateanordnung ausfallsicher konzipiert.

Dem Steuerungsventil ist ein pneumatischer Aktuator zugewiesen, der mit dem Druck P des Unterdruckraumes des pneumatischen Bremskraftverstärkers geschaltet, also aktuiert wird. Wenn der Druck P oberhalb des Schaltdruckes PS liegt, öffnet das Steuerungsventil in seinen Entriegelungszustand, so dass der hydraulische Steuerungsdruck P1 auf den Steuerungsanschluss durchgeschaltet wird. Hierdurch wird schließlich die Kopplungsanordnung in ihren Entriegelungszustand geschaltet.

Es wird vorliegend also Hydraulik zum unmittelbaren Schalten der Kupplung der Vakuumpumpe benutzt. Einem Verbrennungsmotor ist immer eine Hydraulikpumpe in Form einer Schmiermittelpumpe zugeordnet. Der von der Hydraulikpumpe generierte Hydraulikdruck steht daher ohne zusätzlichen Aufwand zur Verfügung. Der von der Hydraulikpumpe generierte Hydraulikdruck kann bis zu mehreren bar betragen, so dass zum Schalten der Kupplungsanordnung auch große Kräfte zur Verfügung stehen. Dies ist beispielsweise dann hilfreich, wenn die Kupplungsanordnung als Reibungskupplung ausgebildet ist, und mit einer hohen Vorspannkraft in ihre Verriegelungsposition, also in Ihren eingekuppelten Zustand vorgespannt ist. Der Steuerungsdruck P1 zum Schalten der Kupplungsanordnung muss nicht notwendigerweise identisch sein mit dem Hydraulikdruck, der von der Hydraulikpumpe generiert wird, sondern kann niedriger als der Hydraulikdruck der Hydraulikpumpe sein.

Die schaltbare Kupplungsanordnung ist als Formschluss-Kupplungsanordnung zum drehfesten Verriegeln des Kopplungselements mit dem Pumpenrotor im Verriegelungszustand und zum Lösen des Kopplungselements von dem Pumpenrotor im Entriegelungszustand ausgebildet. Die Formschluss-Kupplungsanordnung wird im Formschluss miteinander verriegelt, so dass sehr hohe Drehmomente mit sehr hoher Zuverlässigkeit übertragen werden können. Die Kupplungsanordnung kann im Verriegelungszustand nicht durchrutschen. Da die Kraftübertragung im Verriegelungszustand über Formschluss erfolgt, sind grundsätzlich keine hohen Betätigungskräfte zum Schließen und Öffnen der Kupplung erforderlich. Dieser Umstand erlaubt einen sehr kompakten Aufbau der Kupplungsanordnung.

Vorzugsweise weist das Steuerungsventil ein Vorspannelement auf, durch das das Steuerungsventil in seinen Verriegelungszustand vorgespannt ist. Falls die Aktuatorik für das Steuerungsventil ausfällt, wird dieses standardmäßig in seinen Verriegelungszustand, d.h. in seinen geschlossenen Zustand vorgespannt. Hierdurch ist sichergestellt, dass bei Ausfall der Steuerungsventil- Aktuatorik die Kupplungsanordnung stets in ihrem Verriegelungszustand geschaltet bleibt bzw. wird, so dass der Pumpenrotor der Vakuumpumpe angetrieben bleibt.

Gemäß einer bevorzugten Ausgestaltung schaltet das Steuerungsventil in seinem Verriegelungszustand atmosphärischen Hydraulik-Druck P0 auf den Steuerungsanschluss durch. Hierdurch wird insbesondere sichergestellt, dass beim Umschalten des Steuerungsventils in seinen Verriegelungszustand, d.h. beim Schließen des Steuerungsventils, der hydraulische Druck in der Kupplungsanordnung der Vakuumpumpe schnell auf atmosphärischen Druck absinkt, so dass die Kupplungsanordnung schnell in ihren Verriegelungszustand geschaltet wird und die Vakuumpumpe ihren Pumpbetrieb aufnimmt.

Gemäß einer bevorzugten Ausgestaltung weist das Pumpengehäuse einen separaten Schmierungsanschluss auf, der axial zwischen dem Steuerungsanschluss und dem Pumpenrotor angeordnet ist. Über den Schmierungsanschluss wird das Pumpenlager, insbesondere, wenn es als Gleitlager ausgebildet ist, geschmiert. Das Pumpenlager ist bevorzugt axial zwischen dem Pumpenrotor und der Kupplungsanordnung angeordnet. Ferner kann über den Schmierungsanschluss auch die Pumpmimik mit Schmiermittel versorgt werden.

Besonders bevorzugt ist das Steuerungsventil auch mit dem Schmierungsanschluss hydraulisch verbunden, wobei das Steuerungsventil in seinem Entriegelungszustand atmosphärischen Druck P0 auf den Schmierungsanschluss durchschaltet. Auf diese Weise wird ein Kreislauf für die Hydraulikflüssigkeit geschaffen, so dass Leckströme der Hydraulikflüssigkeit gezielt und vollständig abgeführt werden und ein Volllaufen der Pumpmimik mit Hydraulikflüssigkeit verhindert werden kann. Wenn axial zwischen dem Schmierungsanschluss und dem Steuerungsanschluss bzw. zwischen dem Pumpenrotor und der Kupplungsanordnung das Pumpenlager angeordnet ist, wird dieses durch die Druckdifferenz zwischen dem Schmierungsanschluss und dem Steuerungsanschluss axial ständig von der Hydraulikflüssigkeit durchströmt.

Die Kupplungsanordnung weist bevorzugt einen mit dem Pumpenrotor oder dem Kopplungselement drehfest verbundenen Riegelhalter mit mindestens einer radialen Riegelführung und mit einem in der Riegelführung verschiebbaren Riegelkörper auf. Die Riegelführung muss keinesfalls exakt radiale Orientierung aufweisen, jedoch eine radiale Komponente aufweisen, so dass der Riegelkörper sich mit einer radialen Komponente, jedoch nicht zwangsläufig exakt radial, zwischen einer radial inneren und einer radial äußeren Position in der Riegelführung bewegen kann. Die Riegelführung muss nicht zwangsläufig quer zur Bewegungsrichtung des Riegelkörpers vollständig geschlossen ausgebildet sein, sondern kann auch rinnenartig offen ausgebildet sein. Der Riegelkörper kann beispielsweise stiftartig ausgebildet sein, ist jedoch bevorzugt als Kugel ausgebildet.

Dem Riegelhalter ist vorzugsweise ein axial verschiebbarer Führungskörper mit einer zur Axialen geneigten Führungsfläche zugeordnet. Durch die zur Axialen geneigte Führungsfläche wird der Riegelkörper radial in eine Verriegelungsposition bewegt bzw. gezwungen. Die Führungsfläche ist die Fläche, die bei Bewegung des Führungskörpers in die Verriegelungsposition den Riegelkörper radial in eine Verriegelungsposition schiebt bzw. zwingt. Die Neigung der Führungsfläche zur Axialen bestimmt dabei den mechanischen Hebel zwischen der Axialbewegung des Führungskörpers und der Radialbewegung des Riegelkörpers.

Die Kupplungsanordnung weist bevorzugt ferner einen mit dem Kopplungselement oder dem Pumpenrotor drehfest verbundenen Fallenkörper mit mindestens einer rotatorischen Fallensenke auf, in die der Riegelkörper in seiner Verriegelungsposition radial eingreift. Der Fallenkörper ist ungefähr in der Querebene des Riegelhalters und koaxial zu dem Riegelhalter um die Pumpen-Axiale drehbar gelagert. Die Fallensenke ist ungefähr in der Ebene bzw. Querebene der Riegelführung angeordnet. Im Bereich der Fallensenke ist der Radius des Bodens der Fallensenke derart gewählt, dass der Riegelkörper teilweise in die Fallensenke hineinragt und teilweise in der Riegelführung des Riegelhalters verbleibt. Auf diese Weise wird eine formschlüssige Verbindung des Riegelhalters mit dem Fallenkörper hergestellt. Außerhalb der Fallensenke entspricht der Radius des Fallenkörpers beispielsweise ungefähr dem Radius des angrenzenden Riegelhalters.

Vorzugsweise ist der Riegelhalter drehfest mit dem Pumpenrotor und ist der Fallenkörper drehfest mit dem Kopplungselement verbunden. Vorzugsweise ist der Riegelhalter radial innerhalb des Fallenkörpers angeordnet. Solange sich der Riegelhalter dreht, wird der Riegelkörper durch die Fliehkraft radial nach außen gegen den Fallenkörper und gegebenenfalls in die Fallensenke bewegt. Im Entriegelungszustand kommt der Pumpenrotor zusammen mit dem Riegelhalter zum Stehen, so dass der Riegelkörper durch den sich weiterhin drehenden Fallenkörper innerhalb der Riegelführung des Riegelhalters gehalten wird. Erst wenn der Führungskörper aus dem Entriegelungszustand in den Verriegelungszustand bewegt wird, drückt die geneigte Führungsfläche den Riegelkörper radial nach außen, so dass der Riegelkörper schließlich in die Fallensenke des Fallenkörper eingreift und der Riegelhalter zusammen mit dem Pumpenrotor mit dem rotierenden Fallenkörper mitgeschleppt wird.

Vorzugsweise sind mehrere Riegelführungen mit mehreren Riegelkörpern in dem Riegelhalter vorgesehen, wobei auch eine entsprechende Anzahl von Fallensenken an dem Fallenkörper vorgesehen ist. Hierdurch werden das übertragbare Drehmoment und die Redundanz bzw. die Ausfallsicherheit verbessert.

Gemäß einer bevorzugten Ausgestaltung ist an dem Führungskörper eine zylindrische Sperrfläche vorgesehen, durch die der Riegelkörper in der Verriegelungsposition des Riegelkörpers blockiert ist. Die Sperrfläche grenzt bevorzugt an die Führungsfläche axial unmittelbar an. In der Verriegelungsposition müssen auf diese Weise nur sehr geringe Haltekräfte aufgebracht werden, um den Riegelkörper in seiner Verriegelungsposition zu halten.

Gemäß einer bevorzugten Ausgestaltung ist der Führungskörper durch ein Vorspannelement in die Verriegelungsposition mechanisch vorgespannt. Falls die Aktuatorik zum Bewegen des Führungskörpers ausfällt, wird der Führungskörper durch das Vorspannelement stets in die Verriegelungsposition bewegt, so dass die Kupplungsanordnung in ihrem Verriegelungszustand verbleibt bzw. in diesen gebracht wird. Hierdurch ist die Kupplungsanordnung ausfallsicher ausgebildet.

Gemäß einer bevorzugten Ausgestaltung weist der Führungskörper einen hydraulischen Kolben auf, der in einem Hydraulikzylinder axial verschiebbar angeordnet ist, wobei der Hydraulikzylinder dem Riegelhalter drehfest zugeordnet ist. Die hydraulische Aktuatorik ist also vollständig dem Riegelhalter zugeordnet.

Vorzugsweise weist die Vakuumpumpe ein Pumpengehäuse auf, das insbesondere den Pumpenrotor umgibt und die Drehlagerung des gesamten Rotors aufweist. Das Pumpengehäuse weist den hydraulischen Steuerungsanschluss auf, der hydraulisch mit dem Hydraulikzylinder verbunden ist.

Bevorzugt ist der Steuerungsanschluss mit einem Ringkanal zwischen dem Pumpengehäuse und einem Zylinderkörper verbunden, der den Hydraulikzylinder radial begrenzt. Durch den geschlossenen Ringkanal kann die Hydraulikflüssigkeit, beispielsweise ein Schmiermittel, von dem feststehenden Gehäuse in den rotierenden Hydraulikzylinder fließen, bzw. umgekehrt von dem Hydraulikzylinder zurück zu dem feststehenden Gehäuse bzw. zu dem hydraulischen Steuerungsanschluss fließen.

Im Folgenden wird unter Bezugnahme auf die Zeichnungen ein Ausführungsbeispiel der Erfindung näher erläutert. Es zeigen:
Figur 1 eine Kfz- Aggregateanordnung mit einem pneumatischen Bremskraftverstärker, einer Hydraulikpumpe und einem Längsschnitt einer mechanischen Kfz-Vakuumpumpe im Verriegelungszustand, die durch einen Verbrennungsmotor angetrieben wird,
Figur 2 einen Querschnitt II - II im Bereich der Kupplungsanordnung der Kfz-Vakuumpumpe der Figur 1,
Figur 3 die Kfz- Aggregateanordnung der Figur 1 mit der Kfz-Vakuumpumpe im Entriegelungszustand, und
Figur 4 einen Querschnitt IV - IV im Bereich der Kupplungsanordnung der Kfz-Vakuumpumpe der Figur 3.

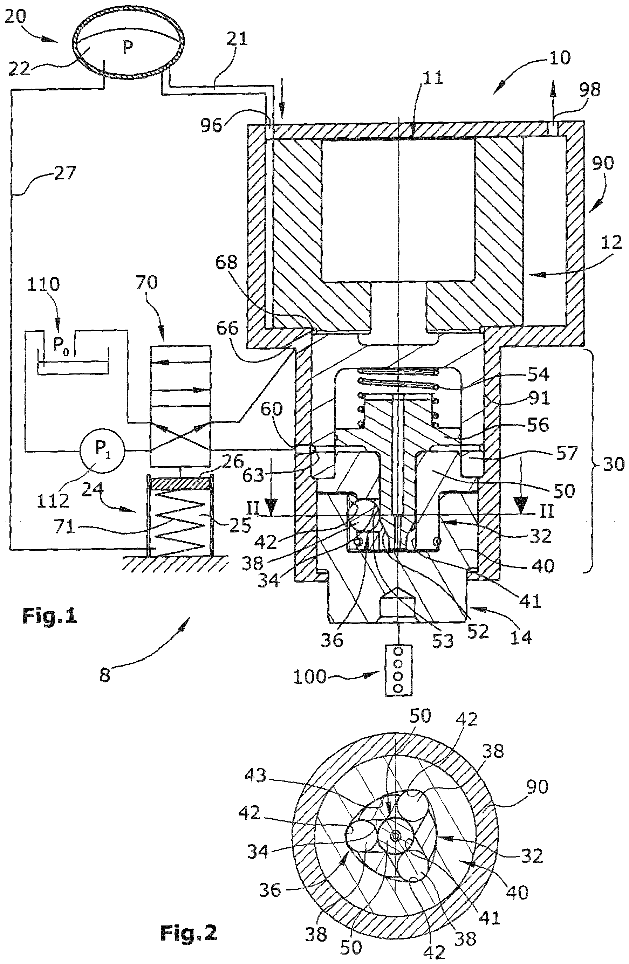

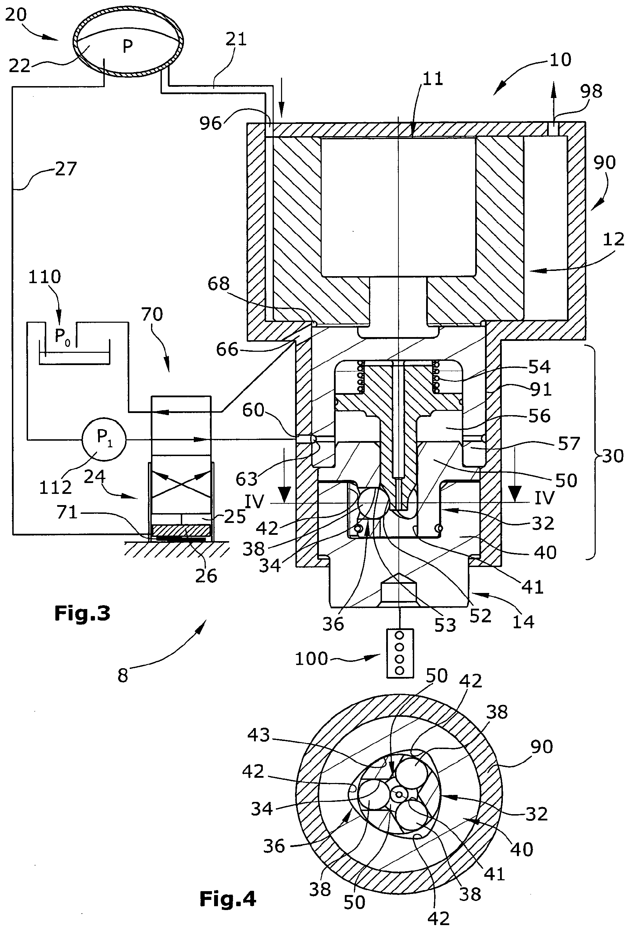

In den Figuren 1 und 3 ist eine Kfz- Aggregateanordnung 8 dargestellt, die im Wesentlichen von einem Verbrennungsmotor 100, einer hydraulisch schaltbaren mechanischen Vakuumpumpe 10 einschließlich eines Steuerungsventils 70 und einem pneumatischen Bremskraftverstärker 20 gebildet wird.

Die Kfz-Vakuumpumpe 10 ist mechanisch an die Kurbelwelle oder die Nockenwelle des Verbrennungsmotors 100 gekoppelt. Die Vakuumpumpe 10 erzeugt einen Unterdruck von unter 500 Millibar für den pneumatischen Bremskraftverstärker 20. Der Bremskraftverstärker 20 weist einen Unterdruckraum 22 auf, in dem ein momentaner Druck P herrscht. Der Unterdruckraum 22 wird ggf. über eine Unterdruckleitung 21 evakuiert, die mit einem Sauganschluss 96 der Vakuumpumpe 10 pneumatisch verbunden ist.

Eine Hydraulikpumpe 112, die vorliegend als Schmiermittelpumpe ausgebildet ist, saugt aus einem Schmiermitteltank 110, in dem ein atmosphärischer Druck P0 herrscht, die Hydraulikflüssigkeit, vorliegend das Schmiermittel, an und pumpt das Schmiermittel mit einem Arbeitsdruck P1 unter anderem zu dem Verbrennungsmotor 100.

Die Vakuumpumpe 10 ist als Verdrängerpumpe ausgebildet und weist einen Rotor 11 auf, der sich aus mehreren Teilen zusammensetzt. Der Rotor 11 weist einen Pumpenrotor 12 auf, der beispielsweise als Drehschieber-Pumpenrotor 12 ausgebildet ist. Der Rotor 11 weist ferner einen sich an den Pumpenrotor 12 axial anschließenden topfförmigen Zylinderkörper 16 auf, in dessen Innenraum ein Führungskörper 50 axial verschiebbar gelagert ist. Die zylindrische Außenseite des Zylinderkörpers 16 und die zylindrische Innenseite des betreffenden Abschnittes des Pumpengehäuses 90 bilden ein Radial-Rotorlager 91, das vorliegend als Gleitlager ausgebildet ist.

An den Zylinderkörper 16 schließt sich axial ein Riegelhalter 32 an, der den von dem Zylinderkörper 16 umgebenden zylindrischen Innenraum axial druckdicht verschließt. Der Pumpenrotor 12, der Zylinderkörper 16 und der Riegelhalter 32 sind drehfest miteinander verbunden, beispielsweise miteinander verschraubt, verlötet oder verschweißt, und bilden zusammen mit dem Führungskörper 50 den Rotor 11.

An den Rotor 11 schließt sich koaxial ein Kopplungselement 14 an, das mechanisch mit dem Verbrennungsmotor 100 gekoppelt ist. Das Kopplungselement 14 ist im Entriegelungszustand der Kupplungsanordnung 30 im Verhältnis zu dem Rotor 11 frei drehbar. Das Kopplungselement 14 ist beispielsweise durch ein Gleitlager in dem Pumpengehäuse 90 drehbar gelagert.

Das Pumpengehäuse 90 weist stirnseitig einen Sauganschluss 96 auf, der an die Arbeiterkammer des pneumatischen Bremskraftverstärkers 20 angeschlossen ist. Ferner weist das Pumpengehäuse 90 stirnseitig einen Druckanschluss 98 auf, durch den das komprimierte Gas ausgestoßen wird.

Wie in den Figuren 2 und 4 dargestellt, weist der Riegelhalter 32 drei radial ausgerichtete Riegelführungen 34 auf, die vorliegend als in einer Querebene liegende Radialbohrungen ausgeführt sind und in einem Winkel von 120° zueinander angeordnet sind. In den Riegelführungen 34 ist jeweils ein Riegelkörper 36 angeordnet, der jeweils als Kugel 38 ausgebildet ist. Zwischen dem Riegelkörper 36 und der Riegelführung 34 ist ein geringes Spiel vorgesehen, so dass sich der Riegelkörper 36 widerstandslos in der Riegelführung 34 radial bewegen kann.

Der außenseitig zylindrisch ausgebildete Riegelhalter 32 ist umgeben von einem Fallenkörper 40, der innenseitig als dreiseitiges Innen-Trochoid 43 ausgebildet ist, wie in den Figuren 2 und 4 gut erkennbar ist. Jede Trochoid-Ecke bildet eine Fallensenke 42, in die jeweils eine Riegelkörper-Kugel 38 radial eingreift, wenn die Kupplungsanordnung 30 sich in dem in den Figuren 1 und 2 dargestellten Verriegelungszustand befindet. Der Innendurchmesser des Trochoides 43 ist geringfügig größer als der zylindrische Außendurchmesser des Riegelhalters 32, so dass sich der Fallenkörper 40 bzw. das Kopplungselement 14 in dem in den Figuren 3 und 4 dargestellten Entriegelungszustand in Bezug auf den Riegelhalter 32 frei drehen kann.

Der Riegelhalter 32 weist eine axiale Führungsbohrung 41 auf, in die die Riegelführungen 34 münden. In der Führungsbohrung 41 ist der teilweise zylindrische Führungskörper 50 axial verschiebbar gelagert. An dem distalen freien Längsende des Führungskörpers 50 ist eine zylindrische Sperrfläche 53 vorgesehen, an die sich distal eine sich konisch verjüngende Führungsfläche 52 anschließt. In der in den Figuren 1 und 2 dargestellten Verriegelungsposition des Führungskörpers 50 ist die zylindrische Sperrfläche 53 ausgerichtet mit der mittleren Querebene der Riegelführungen 34, so dass die Riegelkörper-Kugeln 38 radial nach außen geschoben und fixiert sind, und jeweils in die Fallensenken 42 hineinragen. In dem Verriegelungszustand ist ein Formschluss zwischen dem Riegelhalter 32 und dem Fallenkörper 40 hergestellt, so dass der Rotor 11 einschließlich des Pumpenrotors 12 drehfest mit dem Kopplungselement 14 verkuppelt ist.

In dem in den Figuren 3 und 4 dargestellten Entriegelungszustand steht der Führungskörper 50 axial in seiner Entriegelungsposition, so dass das distale Ende der konischen Führungsfläche 52 mit der mittleren Querebene der Riegelführungen 34 ausgerichtet ist. Hierdurch können die Riegelkörper-Kugeln 38 radial vollständig in die Riegelführungen 34 eingeschoben werden, so dass die Riegelkörper-Kugeln 38 nicht mehr zwangsweise in die Fallensenken 42 hineinragen. Durch die rotatorische Relativbewegung zwischen dem Fallenkörper 40 und dem Riegelhalter 32 werden die Riegelkörper-Kugeln 38 radial nach innen in die Riegelführungen 34 geschoben, so dass sich der Fallenkörper 40 in Bezug auf den Riegelhalter 32 frei drehen kann. In dem Entriegelungszustand kommt der Rotor 11 einschließlich des Pumpenrotors 12 schließlich zum Stillstand, auch wenn sich das Kopplungselement 14 weiterhin dreht.

Dem Führungskörper 50 ist einstückig ein Kolben 56 zugeordnet, der in einem Hydraulikzylinder 57 axial verschiebbar ist. Der Kolben 56 bzw. der Führungskörper 50 ist durch ein als Schraubenfeder ausgebildetes Vorspannelement 54 axial in die in den Figuren 1 und 2 dargestellte Verriegelungsposition mechanisch vorgespannt. Der Hydraulikzylinder 57 wird durch eine radiale Hydraulikleitung 64 in dem Zylinderkörper 16 hydraulisch gespeist, die in einem Ringkanal 63 am Außenumfang des Zylinderkörpers 16 mündet. Der Ringkanal 63 ist fluidisch mit einem hydraulischen Steuerungsanschluss 60 an dem Pumpengehäuse 90 verbunden.

In der Grenz-Querebene zwischen dem Pumpenrotor 12 und dem Zylinderkörper 16 ist ein weiterer Ringkanal 68 vorgesehen, der mit einem Schmierungsanschluss 66 an dem Pumpengehäuse 90 fluidisch verbunden ist. Der Steuerungsanschluss 60 und der Schmierungsanschluss 66 sind über entsprechende Hydraulikleitungen mit dem Steuerungsventil 70 verbunden, das als 4/2 Umschaltventil mit einem entsprechenden Ventilkörper 27 ausgebildet ist. Das Steuerungsventil 70 wird durch den pneumatischen Aktuator 24 mechanisch geschaltet.

Durch das Steuerungsventil 70 kann der von der Schmiermittelpumpe 112 generierte Arbeitsdruck P1 bzw. der in dem Schmiermitteltank 110 herrschende atmosphärische Druck P0 wechselseitig auf den Steuerungsanschluss 60 und den Schmierungsanschluss 66 aufgeschaltet werden. Das Steuerungsventil 70 ist durch ein Vorspannelement 71 in seine in der Figur 1 dargestellte Verriegelungsposition vorgespannt, so dass bei defektem Aktuator 24 der Hydraulikzylinder 57 stets an den atmosphärischen Druck P0 angeschlossen ist.

Der pneumatische Aktuator 24 wird von einem Pneumatik- Kolben 26 gebildet, der in einem Zylinderraum 25 über eine Pneumatik- Leitung 27 mit dem Druck P aus dem Bremskraftverstärker- Unterdruckraum 22 beaufschlagt wird. Der Pneumatik-Kolben 26 ist fest mit dem Ventilkörper 27 des Steuerungsventils 70 verbunden, so dass der Ventilkörper 27 der Bewegung des Kolbens 26 unmittelbar folgt. Der Ventilkörper 27 und der Pneumatik-Kolben 26 sind durch ein Vorspannelement 71 in den Verriegelungszustand mechanisch vorgespannt

In dem in den Figuren 1 und 2 dargestellten Verriegelungszustand ist der Druck P in dem Unterdruckraum 22 unterhalb eines Schaltdruckes PS, so dass das Steuerungsventil 70 in der in der Figur 1 dargestellten Verriegelungsposition steht. Hierdurch werden der Schmierungsanschluss 66 mit unter dem Arbeitsdruck P1 stehenden Schmiermittel und der Steuerungsanschluss mit atmosphärischen Druck P0 beaufschlagt, so dass der hydraulische Kolben 56 mit atmosphärischen Druck P0 drucklos geschaltet ist. Die Kupplungsanordnung 30 ist verriegelt, so dass der Pumpenrotor 12 rotiert, wodurch wiederum der Unterdruckraum 22 evakuiert wird, so dass sich der absolute Druck P in dem Unterdruckraum 22 des Bremskraftverstärkers 20 verringert. Der Hauptstrom des Schmiermittels verläuft von dem Schmierungsanschluss 66 in axialer Richtung durch das Lager 91 zum Steuerungsanschluss 60, so dass der Pumpenrotor 12 und das Lager 91 geschmiert werden.

In dem in den Figuren 3 und 4 dargestellten Entriegelungszustand liegt der Druck P in dem Unterdruckraum 22 oberhalb des Schaltdruckes PS, so dass das Steuerungsventil 70 in der in der Figur 3 dargestellten Entriegelungs- Position steht bzw, in diese bewegt wird. Hierdurch wird das unter Arbeitsdruck P1 stehende Schmiermittel über den Steuerungsanschluss 60 in den Hydraulikzylinder 57 eingespeist, so dass der Führungskörper 50 in seine Entriegelungsposition geschoben wird, wodurch wiederum schließlich das Kopplungselement 14 von dem Rotor 11 rotatorisch entkuppelt wird. Der Pumpenrotor 12 wird abgekuppelt und kommt unabhängig von der Drehbewegung des Kopplungselementes 14 zum Stillstand, so dass der Unterdruckraum 92 des Bremskraftverstärkers 20 nicht weiter evakuiert wird.

## Patentansprüche

1. Kfz- Aggregateanordnung (8) bestehend aus einem Verbrennungsmotor (100), einer schaltbaren mechanischen Vakuumpumpe (10) und einem pneumatischen Bremskraftverstärker (20), wobei
die Vakuumpumpe (10) aufweist:
einen verdrängenden Pumpenrotor (12),
ein durch den Verbrennungsmotor (100) mechanisch angetriebenes Kopplungselement (14), und
einen hydraulischen Steuerungsanschluss (60) und eine über den Steuerungsanschluss (60) hydraulisch schaltbare Kupplungsanordnung (30) zum drehfesten Verriegeln des Kopplungselements (14) mit dem Pumpenrotor (12) im Verriegelungszustand und zum Lösen des Kopplungselements (14) von dem Pumpenrotor (12) im Entriegelungszustand,
der Bremskraftverstärker (20) einen Unterdruckraum (22) aufweist, der über eine Unterdruckleitung (21) mit einem Sauganschluss (96) der Vakuumpumpe (10) verbunden ist,
eine Hydraulikpumpe (112) zum Pumpen einer Hydraulikflüssigkeit mit einem Steuerungsdruck P1 vorgesehen ist,
ein schaltbares Steuerungsventil (70) vorgesehen ist, das in seinem Entriegelungszustand den Steuerungsdruck P1 der Hydraulikflüssigkeit zum Entriegeln auf den Steuerungsanschluss (60) durchschaltet, und
das Steuerungsventil (70) einen pneumatischen Aktuator (24) aufweist, der mit dem Druck P des Unterdruckraumes (22) beaufschlagt ist und der den Steuerungsdruck P1 auf den Steuerungsanschluss (60) durchschaltet, wenn der Druck P in dem Unterdruckraum (22) oberhalb eines Schaltdruckes PS liegt, so dass das Steuerungsventil (70) in seinen Entriegelungszustand geschaltet wird,
**dadurch gekennzeichnet,**
**dass** die Kupplungsanordnung (30) als Formschlusskupplung ausgebildet ist.

2. Kfz- Aggregateanordnung (8) nach Anspruch 1, wobei die Hydraulikpumpe (112) eine Schmiermittelpumpe zur Versorgung des Verbrennungsmotors (100) mit der als Schmiermittel ausgebildeten Hydraulikflüssigkeit ist.

3. Kfz- Aggregateanordnung (8) nach einem der vorangegangenen Ansprüche, wobei das Steuerungsventil (70) durch ein Vorspannelement (71) in seinen Verriegelungszustand vorgespannt ist.

4. Kfz- Aggregateanordnung (8) nach einem der vorangegangenen Ansprüche, wobei das Steuerungsventil (70) in seinem Verriegelungszustand atmosphärischen Druck P0 auf den Steuerungsanschluss (60) durchschaltet.

5. Kfz- Aggregateanordnung (8) nach einem der vorangegangenen Ansprüche, wobei ein Pumpengehäuse (90) einen separaten Schmierungsanschluss (66) aufweist, der axial zwischen dem Steuerungsanschluss (60) und dem Pumpenrotor (12) angeordnet ist, das Steuerungsventil (70) mit dem Schmierungsanschluss (66) hydraulisch verbunden ist, und das Steuerungsventil (60) im Entriegelungszustand atmosphärischen Druck P0 auf den Schmierungsanschluss (66) durchschaltet.

6. Kfz- Aggregateanordnung (8) nach einem der vorangegangenen Ansprüche, wobei die Kupplungsanordnung (30) aufweist:
einen mit dem Pumpenrotor (12) oder dem Kopplungselement (14) drehfest verbundenen Riegelhalter (32) mit mindestens einer radialen Riegelführung (34) und einem in der Riegelführung (34) verschiebbaren Riegelkörper (36),
einen dem Riegelhalter (32) zugeordneten axial verschiebbaren Führungskörper (50) mit einer zur Axialen geneigten Führungsfläche (52), durch die der Riegelkörper (36) radial in eine Verriegelungsposition gezwungen wird, und einen mit dem Kopplungselement (14) oder dem Pumpenrotor (12) drehfest verbundenen Fallenkörper (40) mit mindestens einer rotatorischen Fallensenke (42), in die der Riegelkörper (36) in seiner Verriegelungsposition eingreift.

7. Kfz- Aggregateanordnung (8) nach Anspruch 6, wobei an dem Führungskörper (50) eine zylindrische Sperrfläche (53) vorgesehen ist, durch die der Riegelkörper (36) in der Verriegelungsposition blockiert ist und die bevorzugt an die Führungsfläche (52) axial angrenzt.

8. Kfz- Aggregateanordnung (8) nach einem der vorangegangenen Ansprüche 6 oder 7, wobei der Führungskörper (50) durch ein Vorspannelement (54) in die Verriegelungsposition mechanisch vorgespannt ist.

9. Kfz- Aggregateanordnung (8) nach einem der vorangegangenen Ansprüche 6-8, wobei die Fallensenke (42) radial außerhalb der Riegelführung (34) angeordnet ist.

10. Kfz- Aggregateanordnung (8) nach einem der vorangegangenen Ansprüche 6-9, wobei der Riegelkörper (36) eine Kugel (38) ist.

11. Kfz- Aggregateanordnung (8) nach einem der vorangegangenen Ansprüche 6-10, wobei der Führungskörper (50) einen hydraulischen Kolben (56) aufweist, der in einem Hydraulikzylinder (57) axial verschiebbar angeordnet ist, der dem Riegelhalter (32) drehfest zugeordnet ist.

12. Kfz- Aggregateanordnung (8) nach einem der vorangegangenen Ansprüche 6-11, wobei ein Pumpengehäuse (90) vorgesehen ist, das den hydraulischen Steuerungsanschluss (60) aufweist, der hydraulisch mit dem Hydraulikzylinder (57) verbunden ist.

13. Kfz- Aggregateanordnung (8) nach einem der vorangegangenen Ansprüche 6-12, wobei der Steuerungsanschluss (60) mit einem Ringkanal (63) zwischen dem Pumpengehäuse (90) und einem Zylinderkörper (16) verbunden ist, der den Hydraulikzylinder (57) radial begrenzt.

## Claims

1. An arrangement of motor vehicle units (8) consisting of an internal combustion engine (100), a switchable mechanical vacuum pump (10), and a pneumatic power brake unit (20), wherein
the vacuum pump (10) has:
a positive-displacement pump rotor (12);
a coupling element (14) that is mechanically driven by the internal combustion engine (100); and
a hydraulic control connection (60) and a coupling arrangement (30) that is hydraulically switchable through the control connection (60) to lock the coupling element (14) with the pump rotor (12) in a non-rotatable manner in the locked state and to unlock the coupling element (14) from the pump rotor (12) in the unlocked state;
the power brake unit (20) has a negative pressure chamber (22) that is connected, through a vacuum line (21), with a suction connection (96) of the vacuum pump (10);
a hydraulic pump (112) is provided to pump a hydraulic fluid with a control pressure P1;
a switchable control valve (70) is provided that in its unlocked state switches the control pressure P1 of the hydraulic fluid through to the control connection (60) to unlock [the coupling arrangement]; and
the control valve (70) has a pneumatic actuator (24) that is acted on by the pressure P of the negative pressure chamber (22) and that switches the control pressure P1 through to the control connection (60) if the pressure P in the negative pressure chamber (22) lies above a threshold pressure PS, so that the control valve (70) is switched into its unlocked state,
**characterized in that**
the coupling arrangement (30) is in the form of a form-fit coupling

2. The arrangement of motor vehicle units (8) described in claim 1, wherein the hydraulic pump (112) is a lubricant pump to supply the internal combustion engine (100) with the hydraulic fluid in the form of a lubricant.

3. The arrangement of motor vehicle units (8) described in one of the preceding claims, wherein the control valve (70) is prestressed in its locked state by a prestress element (71).

4. The arrangement of motor vehicle units (8) described in one of the preceding claims, wherein the control valve (70), when in its locked state, switches atmospheric pressure P0 through to the control connection (60).

5. The arrangement of motor vehicle units (8) described in one of the preceding claims, wherein a pump housing (90) has a separate lubrication connection (66), which is arranged axially between the control connection (60) and the pump rotor (12), the control valve (70) is hydraulically connected with the lubrication connection (66), and the control valve (70), in its unlocked state, switches atmospheric pressure P0 through to the lubrication connection (66).

6. The arrangement of motor vehicle units (8) described in one of the preceding claims, wherein the coupling arrangement (30) has:
a bar holder (32) that is non-rotatably connected with the pump rotor (12) or the coupling element (14) and that has at least one radial bar guide (34) and a bar body (36) that can be moved in the bar guide (34);
a guide body (50) which can be moved in the axial direction and which is associated with the bar holder (32) and which has a guide surface (52) that is inclined in the axial direction and that forces the bar body (36) in the radial direction into a locked position; and
a trap body (40) that is non-rotatably connected with the coupling element (14) or the pump rotor (12) and that has at least one rotary trap depression (42) into which the bar body (36) engages in its locked position.

7. The arrangement of motor vehicle units (8) described in claim 6, wherein the guide body (50) has a cylindrical retaining surface (53) on it, which blocks the bar body (36) in the locked position of the bar body and which preferably axially borders the guide surface (52).

8. The arrangement of motor vehicle units (8) described in one of the preceding claims 6 or 7, wherein the guide body (50) is mechanically prestressed into the locked position by a prestress element (54).

9. The arrangement of motor vehicle units (8) described in one of the preceding claims 6-8, wherein the trap depression (42) is arranged radially outside the bar guide (34).

10. The arrangement of motor vehicle units (8) described in one of the preceding claims 6-9, wherein the bar body (36) is a sphere (38).

11. The arrangement of motor vehicle units (8) described in one of the preceding claims 6-10, wherein the guide body (50) has a hydraulic piston (56) that is arranged so that it can be axially moved in a hydraulic cylinder (57) that is non-rotatably associated with the bar holder (32).

12. The arrangement of motor vehicle units (8) described in one of the preceding claims 6-11, wherein a pump housing (90) is provided which has the hydraulic control connection (60) that is hydraulically connected with the hydraulic cylinder (57).

13. The arrangement of motor vehicle units (8) described in one of the preceding claims 6-12, wherein the control connection (60) is connected with a ring channel (63) between the pump housing (90) and a cylindrical body (16) that radially borders the hydraulic cylinder (57).

## Revendications

1. Système de propulsion automobile (8) avec un moteur à combustion interne (100), une pompe à vide mécanique commutable (10) et un servofrein pneumatique (20), la pompe à vide (10) comprenant:
un rotor de pompe de déplacement (12),
un élément d'accouplement (14) entraîné mécaniquement par le moteur à combustion interne, et
un raccord de commande hydraulique (60) et un ensemble d'accouplement à commutation hydraulique (30), commutable hydrauliquement par le raccord de commande (60), pour verrouiller de manière non rotative l'élément d'accouplement (14) avec le rotor de pompe (12) dans l'état bloqué et pour relâcher l'élément d'accouplement (14) du rotor de pompe (12) dans l'état de déverrouillage,
le servofrein (20) a une chambre à vide (22) reliée par une conduite de vide (21) à un raccord d'aspiration (96) de la pompe à vide (10),
une pompe hydraulique (112) prévue pour pomper un fluide hydraulique avec une pression de commande P1,
une soupape de commande commutable (70) est prévue qui, dans son état de déverrouillage, transmet la pression de commande P1 du fluide hydraulique au raccord de commande (60) pour déverrouiller, et
la soupape de commande (70) a un actionneur pneumatique (24) sur lequel agit la pression P de la chambre à vide (22) et qui transmet la pression de commande P1 vers le raccord de commande (60) lorsque la pression P dans la chambre à vide (22) est supérieure à une pression de commutation PS, de sorte que la soupape de commande (70) est commutée dans son état de déverrouillage,
**caractérisé en ce que**
l'ensemble d'accouplement (30) est conçu comme un accouplement positif.

2. Système de propulsion automobile (8) selon la revendication 1, dans lequel la pompe hydraulique (112) est une pompe à lubrifiant pour alimenter le moteur à combustion interne (100) en fluide hydraulique faisant office de lubrifiant.

3. Système de propulsion automobile (8) selon l'une quelconque des revendications précédentes, dans lequel la soupape de commande (70) est sollicitée dans son état de verrouillage par un élément de sollicitation (71).

4. Système de propulsion automobile (8) selon l'une des revendications précédentes, dans lequel la soupape de commande (70) dans son état de verrouillage transmet de la pression atmosphérique PO sur le raccord de commande (60).

5. Système de propulsion automobile (8) selon l'une quelconque des revendications précédentes, dans lequel un boitier de pompe (90) présent un raccord de lubrification (66) séparé, disposé axialement entre le raccord de commande (60) et le rotor de pompe (12), la soupape de commande (70) est raccordée hydrauliquement au raccord de lubrification (66), et la soupape de commande (60) transmet, dans l'état de déverrouillage, la pression atmosphérique PO au raccord de lubrification (66).

6. Système de propulsion automobile (8) selon l'une des revendications précédentes, dans lequel le dispositif d'accouplement (30) comprend:
un support de verrou (32) relié avec le rotor de pompe (12) ou l'élément d'accouplement (14) de manière solidaire en rotation avec au moins un guide de verrou radial (34) et un corps de verrou (36) pouvant être déplacé dans le guide de verrou (34),
un corps de guidage (50) pouvant être déplacé axialement, associé au support de verrou (32), ayant une surface de guidage (52) inclinée par rapport au plan axial, par laquelle le corps de verrou (36) est forcé radialement dans une position de verrouillage, et
un corps de clenche (40) relié avec l'élément d'accouplement (14) ou le rotor de pompe (12) de manière solidaire en rotation, avec au moins un creux de clenche rotatif (42) dans lequel le corps de verrou (36) s'engage dans sa position de verrouillage.

7. Système de propulsion automobile (8) selon la revendication 6, dans lequel est prévu sur le corps de guidage (50) une surface de blocage cylindrique (53), par laquelle le corps de verrou (36) est bloqué en position de verrouillage et qui, de préférence, est axialement adjacente à la surface de guidage (52).

8. Système de propulsion automobile (8) selon l'une des revendications précédentes 6 ou 7, dans lequel le corps de guidage (50) est sollicité mécaniquement dans la position de verrouillage par un élément de sollicitation (54).

9. Système de propulsion automobile (8) selon l'une des revendications précédentes 6 à 8, dans lequel le creux de clenche (42) est disposé de manière radiale à l'extérieur du guide de verrou (34).

10. Système de propulsion automobile (8) selon l'une des revendications précédentes 6 à 9, dans lequel le corps de verrou (36) est une boule (38).

11. Système de propulsion automobile (8) selon l'une des revendications précédentes 6 à 10, dans lequel le corps de guidage (50) comprend un piston hydraulique (56) qui est disposé de manière à pouvoir être déplacé axialement dans un cylindre hydraulique (57) qui est associé au support de verrou (32) de manière solidaire en rotation.

12. Système de propulsion automobile (8) selon l'une quelconque des revendications précédentes 6 à 11, dans lequel un boitier de pompe (90) est prévu, comprenant le raccord de commande hydraulique (60) relié hydrauliquement au cylindre hydraulique (57).

13. Système de propulsion automobile (8) selon l'une des revendications précédentes 6 à 12, dans lequel le raccord de commande (60) avec un canal annulaire (63) est relié entre le boitier de pompe (90) et un corps de vérin (16) qui limite le vérin hydraulique (57) radialement.
